# EUROPEAN PATENT APPLICATION

(11) **EP 1 772 772 A1**
(43) Date of publication of application: **11.04.2007**
(21) Application number: 05751138.8
(22) Date of filing: 06.06.2005
(51) Int. Cl.: G03B 21/60, G02B 5/32, G03H 1/18

(54) **HOLOGRAM SCREEN**

(30) Priority: 28.07.2004 JP 2004220271
(71) Applicant: Sumitomo Electric Industries, Ltd., Osaka-shi, Osaka 541-0041 (JP)
(72) Inventor: USHIRO, Toshihiko o/c Itami works of Sumitomo Ele., Itami-shi, Hyogo (JP); ODA,Kazuhiko o/c Itami works of Sumitomo Ele., Itami-shi, Hyogo (JP); MATSUURA, Takashi o/c Itami works of Sumitomo Ele., Itami-shi, Hyogo (JP)
(74) Representative: HOFFMANN EITLE
(86) International application number: PCT/JP2005/010336
(87) International publication number: WO 2006/011303

(57) **Abstract**

The present invention provides a holographic screen having high durability and high diffraction efficiency due to a modulated refractive index structure having a large refractive index change Δn.

The holographic screen includes a diamond-like carbon (DLC) layer (22). The DLC layer has a modulated refractive index structure including a plurality of regions with a relatively high refractive index (n1) and a plurality of regions with a relatively low refractive index (n2) such that light projected from a projector onto the screen is deflected in the direction toward a observer and light coming from an object behind the screen is allowed to pass through the screen to travel toward the observer.

## Description

### Technical Field

The present invention relates to screens for displaying characters or images projected from projectors and particularly relates to a holographic screen that allows an observer to see both an image projected from a projector onto the screen and an object behind the holographic screen at the same time.

### Background Art

The following screens can be used for various applications: screens having a function of allowing observers to see both images projected from projectors onto the screens and objects behind the holographic screens at the same time. Hence, attempts are being made to develop the screens. This type of screen allows an observer to see two images at the same time and therefore is called a combiner.

The simplest example of a screen functioning as a combiner is a half-mirror screen. The half-mirror screen reflects a component of light projected from a projector toward an observer and allows a component of light coming from an object behind the half-mirror screen to pass through the half-mirror screen.

For example, if the half-mirror screen is attached to the wind shield (front glass) of a car and the speed of the car or information obtained from a car navigation system is projected onto the half-mirror screen from a projector, the driver of the car can see the car speed or information projected onto the half-mirror screen and also can obtain visual information about the road ahead of the car at the same time.

The half-mirror screen can reflect only half or less of the amount of light projected thereonto and allows only half or less of the amount of light coming from an object behind the half-mirror screen to pass therethrough. Therefore, in the half-mirror screen, there is a problem in that the utilization efficiency of light projected from a projector is low and the utilization efficiency of light coming from the object behind the half-mirror screen is also low.

An attempt to use a holographic screen as a combiner is being made to improve the efficiency of light utilization. The holographic screen can deflect most of light projected from a projector set to meet diffraction conditions of the hologram in a predetermined direction and allows most of light coming from an object that does not meet the diffraction conditions thereof to pass through the holographic screen. Japanese Unexamined Patent Application Publication No. 9-33856, hereinafter referred to as Patent Reference 1, discloses various applications of such a type of holographic screen.

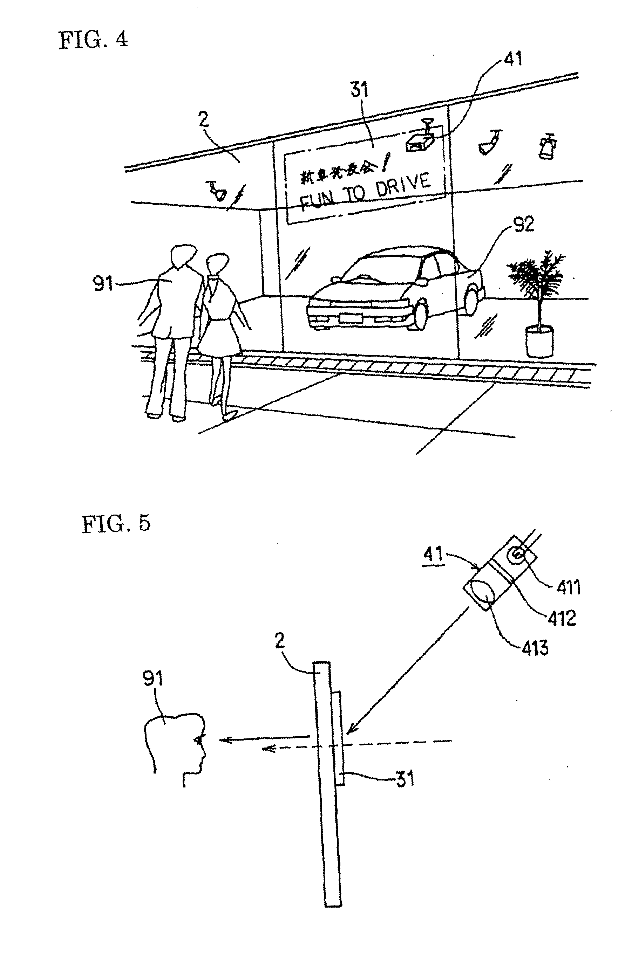

Figure 4 shows an application of a holographic screen disclosed in Patent Reference 1. In this application, the holographic screen 31 is attached to a show window 2 of a car dealer. A beam of light for displaying character information or an image is projected onto the holographic screen 31 from a projector 41 mounted on the ceiling of a showroom. An observer 91 standing outside the showroom can see the image projected onto the holographic screen 31 and an exhibit car 92 placed in the showroom at the same time.

Figure 5 is a schematic sectional view illustrating the operation of the holographic screen 31 shown in Fig. 4. The projector 41 includes a light source 411 such as a halogen lamp, a slide film 412, and a projection lens 413. The projector 41 may be replaced with a cathode ray tube (CRT) projector or a liquid crystal (LC) projector.

As indicated by a solid-line arrow in Fig. 5, the light of an image projected onto the holographic screen 31 attached to the show window 2 from the projector 41 is deflected in the direction toward the observer 91 by the diffraction effect of a hologram when the light passes through the screen. Therefore, the holographic screen 31 is of a transmission type.

The incident angle and wavelength of light projected from the projector 41 are set such that the light projected therefrom meets diffraction conditions of the holographic screen 31. In contrast, light coming from, for example, the exhibit car 92 in the showroom does not meet the diffraction conditions of the holographic screen 31. Hence, the light coming from the exhibit car 92 passes through the holographic screen 31 as indicated by a broken-line arrow in Fig. 5 and therefore is visible to the observer 91.

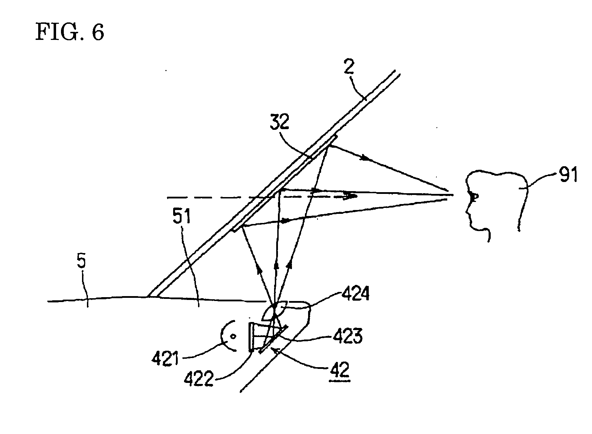

Figure 6 shows an application of another holographic screen disclosed in Patent Reference 1. In this application, the holographic screen 32 is of a reflective type and is attached to the inner face of the wind shield 2 of a car 5. For example, an LC projector 42 for projecting various pieces of information onto the screen 32 is placed in a dashboard 51. The LC projector 42 includes, for example, a light source 421, a liquid crystal display (LCD) 422, a mirror 423, and a projection lens 424.

Light projected from the projector 42 onto the holographic screen 32 is set to meet diffraction conditions of the hologram and therefore is diffractively reflected toward a driver 91 as indicated by a solid-line arrow in Fig. 6. In contrast, light coming from an object ahead the car 5 does not meet the diffraction conditions of the holographic screen 32; hence, the light coming therefrom passes through the holographic screen 32 as indicated by a broken-line arrow in Fig. 6 and therefore is visible to the driver 91.

Thus, if the speed of the car or information obtained from a car navigation system is projected onto the holographic screen 32 from the projector 42, the driver 91 can obtain visual information about the road ahead of the car (without averting the driver's eyes from a sight ahead the car) and can see the car speed or information projected onto the holographic screen 32 at the same time. This is effective in improving the safety of car driving.
Patent Reference 1: Japanese Unexamined Patent Application Publication No. 9-33856

### Disclosure of Invention

### Problems to be Solved by the Invention

A conventional holographic screen has been manufactured in such a manner that a dry plate including a photopolymer layer or a dichromate gelatin layer is exposed to interference light such that a modulated refractive index structure is formed.

The holographic screen manufactured using such a material has a problem that the durability thereof is insufficient. That is, the photopolymer layer is readily expanded by heat and therefore has problems such as a reduction in a diffraction effect and the delamination of the photopolymer layer from a substrate. The dichromate gelatin layer is water-absorptive and therefore has a problem causing material deterioration. Furthermore, there is a problem in that the photopolymer layer and the dichromate gelatin layer are deteriorated during long-term exposure to the sunlight.

Furthermore, holographic screens including photopolymer layers or dichromate gelatin layers have a small refractive index change Δn; hence, a holographic screen having high diffraction efficiency is not readily available. For a holographic screen having low diffraction efficiency, the utilization efficiency of light projected onto the screen cannot be increased.

In view of the circumstances surrounding the conventional holographic screens, it is an object of the present invention to provide a holographic screen having high durability and high diffraction efficiency due to a modulated refractive index structure having a large refractive index change Δn.

### Means to Solve the Problems

A holographic screen according to the present invention includes a diamond-like carbon (DLC) layer. The DLC layer has a modulated refractive index structure including a plurality of regions with a relatively high refractive index and a plurality of regions with a relatively low refractive index such that light projected from a projector onto the screen is deflected in the direction toward a observer and light coming from an object behind the screen is allowed to pass through the screen to travel toward the observer.

If the projector projects light with specific wavelengths onto the screen, the DLC layer may deflect the light with the specific wavelengths.

The DLC layer may include a first DLC sublayer for deflecting light with a wavelength corresponding to red, a second DLC sublayer for deflecting light with a wavelength corresponding to green, and a third DLC sublayer for deflecting light with a wavelength corresponding to blue, whereby the screen deflects a full-color image, projected from the projector, in the direction toward the observer.

The screen may be such a transmission type that light projected from the projector onto the DLC layer is allowed to pass through the screen and deflected. Alternatively, the screen may be such a reflective type that light projected from the projector onto the DLC layer is reflected and deflected.

The following unit can be obtained by combining the above holographic screen and a projector for projecting an image onto the screen: a display unit that allows an observer to see the image projected onto the screen and an object behind the screen at the same time.

The DLC layer included in the holographic screen is preferably formed by plasma CVD. The high-refractive-index regions included in the DLC layer may be formed by energy beam irradiation selected from the group consisting of ultraviolet beam irradiation, ion beam irradiation, synchrotron radiation beam irradiation, and electron beam irradiation.

### Advantageous Effect of the Invention

A holographic screen according to the present invention includes a DLC layer and therefore has much higher durability as compared to conventional one. The DLC layer has a large refractive index change Δn due to energy beam irradiation; hence, the holographic screen has high diffraction efficiency.

### Brief Description of Drawings

[Figure 1] Figure 1 is a schematic sectional view showing a method for manufacturing a DLC holographic screen according to an embodiment of the present invention.
[Figure 2] Figure 2 is a schematic sectional view showing a method for manufacturing a DLC holographic screen according to another embodiment of the present invention.
[Figure 3] Figure 3 is a schematic sectional view showing a method for manufacturing a DLC holographic screen according to another embodiment of the present invention.
[Figure 4] Figure 4 is an illustration showing an application of a transmissive holographic screen.
[Figure 5] Figure 5 is a schematic sectional view showing the optical operation of the holographic screen shown in Fig. 4.
[Figure 6] Figure 6 is a schematic sectional view showing an application of a reflective holographic screen.

### Explanation of Referenced Numerals

- 2: glass plate
- 5: car
- 21: silica glass substrate
- 22: DLC layer
- 22a: low-refractive-index regions
- 22b: high-refractive-index regions
- 23a and 23b: silica glass substrates
- 24a and 24b: gold masks
- 25a and 25b: UV beams
- 31: transmissive holographic screen
- 32: reflective holographic screen
- 34: gold mask
- 35: He ion beam
- 41: slide projector
- 42: liquid crystal (LC) projector
- 51: car dashboard
- 91: observer

### Best Mode for Carrying Out the Invention

Before the present invention has been made, the inventors have confirmed that a light-transmissive DLC layer can be increased in refractive index by irradiating the DLC layer with an energy beam. The DLC layer can be formed on a substrate such as a silicon substrate, a glass substrate, or another material substrate by plasma chemical vapor deposition (CVD). The light-transmissive DLC layer formed by such plasma CVD usually has a refractive index of about 1.55.

Examples of the energy beam for increasing the refractive index of the DLC layer include an ion beam, an electron beam, a beam of synchrotron radiation (SR), and a beam of ultraviolet (UV) light. The refractive index change Δn of the DLC layer can be increased to about 0.65 in such a manner that, for example, He ions are implanted into the DLC layer with an acceleration voltage of 800 keV at a dose of 5 x 1017/cm². The refractive index thereof can be varied by the implantation of H ions, Li ions, B ions, C ions, or similar ions. Alternatively, the refractive index change Δn thereof can be increased up to about 0.65 by irradiation with an SR beam having a spectrum ranging from 0.1 to 130 nm. For UV beam irradiation, the refractive index change Δn thereof can be increased to about 0.22 in such a manner that the DLC layer is irradiated with a KrF excimer laser beam having a wavelength of, for example, 248 nm with an irradiation intensity of 160 mW/mm2 per pulse at a frequency of 100 Hz in a pulsed way. Alternatively, the refractive index thereof can also be varied by irradiation with an ArF excimer laser beam (193 nm), a XeCl excimer laser beam (308 nm), a XeF excimer laser beam (351 nm), or an Ar laser beam (488 nm). These show that the refractive index change of the DLC layer by irradiation with one of these energy beams is astronomically greater than the refractive index change (Δn = about 0.04 or less) of a conventional photopolymer layer irradiated with light.

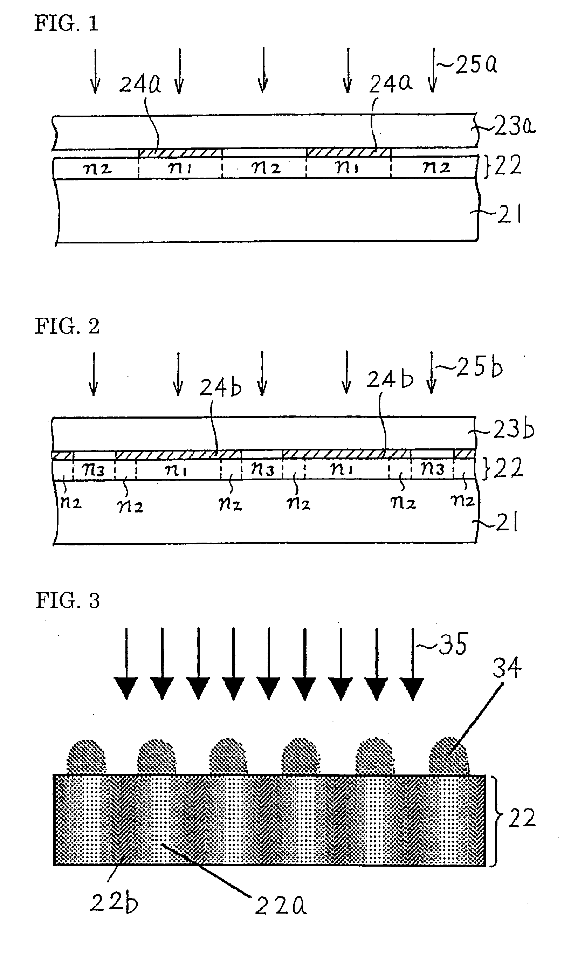

Figure 1 is a schematic sectional view showing a method for manufacturing a holographic screen, according to an embodiment of the present invention, using a DLC layer. The DLC holographic screen is preferably used instead of the holographic screens 31 and 32, shown in Figs. 4 and 6, respectively, manufactured from the photopolymer or dichromate gelatin layer.

In the method shown in Fig. 1, the DLC layer 22 is formed on, for example, a silica (SiO₂) glass substrate 21 by plasma CVD. A mask 24a disposed on a silica glass substrate 23a is provided on the DLC layer 22. Various materials can be used to form the mask 24a. In particular, gold (Au) is preferably used to form the mask 24a. This is because gold can be precisely processed, has a high ability to block an energy beam, and is free from oxidation and corrosion. The gold mask 24a can be formed by a procedure below.

A gold layer with a thickness of about 0.5 µm is deposited on the glass substrate by a known sputtering or electron-beam (EB) vapor deposition process. A resist layer is provided on the gold layer by a coating process. The resist layer is patterned by exposure using a stepper. The gold layer is dryetched through the patterned resist layer, whereby the gold layer is patterned. The patterned resist layer is removed, whereby the patterned gold layer is obtained. Alternatively, the gold mask may be formed by the following procedure: a Ni conductive layer with a thickness of about 50 nm or less is deposited on the glass substrate by a known sputtering or EB deposition process, a resist pattern is formed on the Ni conductive layer, a gold layer with a thickness of about 0.5 µm is deposited on the Ni conductive layer by an electroplating process with the resist pattern disposed therebetween. The gold mask formed by one of the above procedures has a pattern corresponding to the pattern of a diffraction grating with holographic properties.

As shown in Fig. 1, a UV beam 25a is applied to the DLC layer 22 in such a manner that the gold mask 24a is placed on the DLC layer 22. As a result, regions of the DLC layer 22 that are covered with the gold mask 24a are prevented from being irradiated with the UV beam 25a and therefore are not varied in refractive index, that is, the covered regions thereof have the same refractive index n1 as that of the DLC layer 22 formed by plasma CVD. In contrast, regions of the DLC layer 22 that are exposed from the gold mask are irradiated with the UV beam 25a and therefore are varied in refractive index, that is, the exposed regions thereof have an increased refractive index of n2. After UV beam irradiation is finished, the silica glass substrate 23a and the gold mask 24a are removed from the holographic screen 22. A holographic screen 22 manufactured as described above includes two types of sections having a refractive index of n1 or n2 and therefore serves as a two-level modulated refractive index diffraction grating.

On the other hand, a photopolymer holographic screen can serve as a modulated refractive index diffraction grating including low-refractive-index regions and high-refractive-index regions. However, the conventional photopolymer layer processed by UV beam irradiation has a refractive index change Δn of about 0.04 at most as described above. In contrast to the photopolymer layer, the DLC layer processed by UV beam irradiation has a refractive index change Δn of about 0.2. Therefore, the DLC holographic screen 22 shown in Fig. 1 has much higher diffraction efficiency as compared to the photopolymer holographic layer. This leads to an increase in the utilization efficiency of light.

Figure 2 is a schematic sectional view showing a method for manufacturing a holographic screen, according to another embodiment of the present invention, using a DLC layer. As shown in Fig. 2, a DLC holographic layer 22 including two types of regions having a refractive index of n1 or n2 is formed by a method similar to that shown in Fig. 1 and a second gold mask 24b disposed on a silica glass substrate 23a is provided on the DLC holographic layer 22. The resulting DLC holographic layer 22 is irradiated with a UV beam 25b again.

The second gold mask 22b has openings for applying the UV beam to specific sub-regions present in the regions having a high refractive index of n2. After being irradiated with the UV beam 25b, the specific sub-regions in the regions having a high refractive index of n2 have a higher refractive index of n3. The DLC holographic screen 22 manufactured as shown in Fig. 2 serves as a modulated diffraction grating including three types of sections having a refractive index of n1, n2, or n3.

A DLC holographic screen including multi-types of sections having different refractive indexes can be manufactured in such a manner that a DLC layer is repeatedly irradiated with a UV beam sequentially using masks partly different from each other. As well known, a multi-level modulated refractive index diffraction grating exhibits higher diffraction efficiency as compared to the two-level modulated refractive index diffraction grating. This leads to an increase in the utilization efficiency of light.

Figure 3 is a schematic sectional view showing a method for manufacturing a holographic screen, according to another embodiment of the present invention, using a DLC layer. In this method, a gold mask 34 is formed on the DLC layer 22 disposed on a silica glass substrate (not shown). This gold mask 34 can be formed by a method similar to that used to form that gold mask 24a shown in Fig. 1.

This gold mask 34 has a strip shape and is characterized in that this gold mask 34 includes semicircular pillars arranged on the upper face thereof. The semicircular pillars can be formed by, for example, etching or nano-imprinting (transferring).

For example, He ions are applied to the DLC layer 22 through this gold mask 34. Since this strip-shaped gold layer 34 includes the semicircular pillars, portions of the He ions can pass through regions of this mask that are located near side faces of this strip-shaped gold layer 34. As a result, as shown in Fig. 3, the resulting DLC layer 22 includes low-refractive-index regions 22a and high-refractive-index regions 22b and the refractive index varies continuously at the interfaces between the low- and high-refractive-index regions 22a and 22b. After the DLC layer is modulated in refractive index by ion beam irradiation, the resulting DLC layer is immersed in a cyan etching solution for gold at room temperature for several minutes, whereby the gold mask 34 is dissolved in the solution and removed.

In the multi-level modulated refractive index diffraction grating, an increase in the number of levels increases the diffraction efficiency as described above. A modulated refractive index diffraction grating in which the refractive index varies continuously corresponds to one having an infinite refractive index modulation level. That is, the DLC holographic screen manufactured as shown in Fig. 3 has higher diffraction efficiency as compared to that manufactured as shown in Fig. 2. This leads to an increase in the utilization efficiency of light.

As well known from the diffraction theory, a relative increase in grating spacing is effective in diffracting light having a long wavelength and a relative decrease in grating spacing is effective in diffracting light having a short wavelength. That is, in general, diffraction gratings have wavelength selectivity. The wavelength, incident angle, and diffraction angle of light to be diffracted can be controlled within a certain range by appropriately designing the thickness, refractive index change Δn, and grating spacing of a layer for forming a modulated refractive index diffraction grating. An increase in available refractive index change Δn increases the controllable range of each of the wavelength, incident angle, and diffraction angle of light to be diffracted.

In order to selectively diffract light with a specific wavelength, it is preferable that the grating spacing be adjusted to a value suitable for the wavelength, the refractive index change Δn be increased, and the thickness be reduced. This allows an image formed by projecting light with a specific wavelength to be displayed with high diffraction efficiency and increases the resolution of the image.

An increase in refractive index change Δn and a reduction in thickness tend to increase the wavelength and/or incident angle of light to be diffracted. This loosens diffraction conditions that a projector and a holographic screen should satisfy; hence, the projector and the holographic screen can be manufactured at low cost and installation conditions of the projector and the holographic screen can be loosened.

A DLC holographic screen according to the present invention can be controlled over a wide range of refractive index changes Δn; hence, the DLC holographic screen can be designed for various applications and has a much higher degree of freedom in design as compared to conventional one.

According to the present invention, a high-resolution full-color image can be displayed with high optical utilization efficiency using three stacked DLC holographic screens for each displaying a red, green, or blue image.

Conventional photopolymer or dichromate gelatin holographic screens cannot be used under high-temperature, high-humidity conditions or long-term sunlight exposure conditions. In contrast, a DLC holographic screen according to the present invention has extremely high durability because a DLC layer for forming the DLC holographic screen is hardly deteriorated even if the DLC layer is exposed to the sunlight under high-temperature, high-humidity conditions.

### Industrial Applicability

As described above, the present invention provides a DLC holographic screen having much higher durability and diffraction efficiency as compared to conventional one. The DLC holographic screen can be used in a showroom of a shop or used as a combiner for a head-up display installed in a car or an aircraft or a combiner for a small-sized head-mounted head-up display, mounted on a human face, for displaying a large image.

## Claims

1. A holographic screen comprising:
a diamond-like carbon (DLC) layer,
wherein the DLC layer has a modulated refractive index structure including a plurality of regions with a relatively high refractive index and a plurality of regions with a relatively low refractive index such that light projected from a projector onto the screen is deflected in the direction toward a observer and light coming from an object behind the screen is allowed to pass through the screen to travel toward the observer.

2. The holographic screen according to Claim 1, wherein the projector projects light with specific wavelengths onto the screen and the DLC layer deflects the light with the specific wavelengths.

3. The holographic screen according to Claim 1, wherein the DLC layer includes a first DLC sublayer for deflecting light with a wavelength corresponding to red, a second DLC sublayer for deflecting light with a wavelength corresponding to green, and a third DLC sublayer for deflecting light with a wavelength corresponding to blue, whereby the screen deflects a full-color, image, projected from the projector, in the direction toward the observer.

4. The holographic screen according to any one of Claims 1 to 3, wherein the screen is such a transmission type that light projected from the projector onto the DLC layer is allowed to pass through the screen and deflected.

5. The holographic screen according to any one of Claims 1 to 3, wherein the screen is such a reflective type that light projected from the projector onto the DLC layer is reflected and deflected.

6. A display unit comprising the holographic screen according to any one of Claims 1 to 5 and a projector for projecting an image onto the screen, wherein the image projected onto the screen can be seen by an observer together with an object behind the screen.

7. A method for manufacturing the holographic screen according to any one of Claims 1 to 5, comprising a step of forming the DLC layer by plasma CVD.

8. The holographic screen-manufacturing method according to Claim 7, wherein the high-refractive-index regions are formed by energy beam irradiation selected from the group consisting of ultraviolet beam irradiation, ion beam irradiation, synchrotron radiation beam irradiation, and electron beam irradiation.
